# EUROPEAN PATENT APPLICATION

(11) **EP 4 379 926 A2**
(43) Date of publication of application: **05.06.2024**
(21) Application number: 23208141.4
(22) Date of filing: 07.11.2023
(51) Int. Cl.: H01M 50/213, H01M 50/247

(54) **BATTERY CELL CARRIER FOR BATTERY PACK**

(30) Priority: 30.11.2022 US 202218060425
(71) Applicant: Techtronic Cordless GP, Anderson, SC 29621 (US)
(72) Inventor: CRUSE, Taylor, Anderson, 29621 (US); DAVIS, Tyler E., Anderson, 29621 (US); ROBINSON, Andrew, Anderson, 29621 (US); MCGOWAN ANGELES, Richmond Rodolfo, Anderson, 29621 (US); CAUSEY, Brandon, Anderson, 29621 (US)
(74) Representative: Parker, Andrew James

(57) **Abstract**

A battery pack includes a housing having an engaging member, a terminal assembly coupled to the housing, a plurality of cells configured to electrically connect to the terminal assembly, and a cell carrier coupled to the housing and supporting the plurality of cells in the housing. The cell carrier includes a connection member. The connection member and the engaging member cooperate to couple the cell carrier to the housing.

## Description

### FIELD OF TECHNOLOGY

The present technology generally relates to battery packs for power tools, outdoor tools, other electrical devices, etc., and more particularly, to cell carrier for supporting cells in battery packs.

### SUMMARY

Battery packs typically contain multiple cells that are electrically connected to provide a combined power output to a device attached to the battery pack. The multiple cells need to be supported within a housing of the battery pack.

In one independent example, a battery pack may generally include a housing having an engaging member, a terminal assembly coupled to the housing, a plurality of cells configured to electrically connect to the terminal assembly, and a cell carrier coupled to the housing and supporting the plurality of cells in the housing. The cell carrier includes a connection member. The connection member and the engaging member cooperate to couple the cell carrier to the housing.

In some examples, the connection member and the engaging member cooperate to couple the cell carrier to the housing via snap-fit. In some examples, the connection member is a resilient tab.

In another independent example, a battery pack may generally include a housing defining a cavity; a terminal assembly coupled to the housing; and a plurality of cells configured to electrically connect to the terminal assembly, each cell extending along a longitudinal axis. A cell carrier may be coupled to the housing to support the plurality of cells within the cavity. The cell carrier includes a plurality of channels configured to receive the plurality of cells. At least one of the channels includes an elongate opening exposing a full length of a cell contained in the at least one channel.

In yet another independent example, a cell carrier, for supporting a plurality of cells in a cavity of a battery pack, may generally include a housing and a plurality of channels formed in the housing. Each of the plurality of channels is configured to receive one of the plurality of cells. The plurality of channels includes a first row of channels and a second row of channels. The second row of channels has more channels than the first row of channels. The plurality of channels includes at least one channel having an elongate slot exposing the length of the cell positioned in the at least one channel.

Other independent aspects of the technology may become apparent by consideration of the detailed description, claims and accompanying drawings.

### BRIEF DESCRIPTION OF THE DRAWINGS

FIG. 1 is an upper perspective view of a battery pack in accordance with some examples.
FIG. 2 is a lower perspective view of the battery pack of FIG. 1 in accordance with some examples.
FIG. 3 is an upper perspective of an exploded view of the battery pack of FIG. 1 showing a housing, cell assembly, and circuit board in accordance with some examples.
FIG. 4 is an upper perspective of an exploded view of the battery pack of FIG. 1 with the cell assembly exploded in accordance with some examples.
FIG. 5 is a lower perspective of the exploded view of the battery pack of FIG. 4 in accordance with some examples.
FIG. 6 is a front perspective of an exploded view of a cell carrier of the battery pack of FIG. 4 in accordance with some examples.
FIG. 7 is a rear perspective of the exploded view of the cell carrier of FIG. 6 in accordance with some examples.
FIG. 8 is an upper perspective view of a cross-section of the battery pack of FIG. 1 taken through the line 8-8 of FIG. 2 in accordance with some examples.
FIG. 9 is an upper perspective view of a cross-section of the battery pack of FIG. 1 taken through the line 9-9 of FIG. 2 in accordance with some examples.
FIG. 10 is a plan view of a cross-section of the battery pack of FIG. 1 taken through the line 9-9 of FIG. 2 in accordance with some examples.

### DETAILED DESCRIPTION

Before any examples, embodiments, aspects, and features are explained in detail, it is to be understood that those example, embodiments, aspects, and features are not limited in their application to the details of construction and the arrangement of components set forth in the following description or illustrated in the following drawings. Other examples, embodiments, aspects, and features are possible and are capable of being practiced or of being carried out in various ways.

Also, it is to be understood that the phraseology and terminology used herein is for the purpose of description and should not be regarded as limiting. Use of "including" and "comprising" and variations thereof as used herein is meant to encompass the items listed thereafter and equivalents thereof as well as additional items. Use of "consisting of" and variations thereof as used herein is meant to encompass only the items listed thereafter and equivalents thereof. Unless specified or limited otherwise, the terms "mounted," "connected," "supported," and "coupled" and variations thereof are used broadly and encompass both direct and indirect mountings, connections, supports, and couplings.

Relative terminology, such as, for example, "about", "approximately", "substantially", etc., used in connection with a quantity or condition would be understood by those of ordinary skill to be inclusive of the stated value or condition and has the meaning dictated by the context (for example, the term includes at least the degree of error associated with the measurement of, tolerances (e.g., manufacturing, assembly, use, etc.) associated with the particular value or condition, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10% or more) of an indicated value.

Also, the functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not listed.

Furthermore, some examples, embodiments, aspects, and features described herein may include one or more electronic processors configured to perform the described functionality by executing instructions stored in non-transitory, computer-readable medium. Similarly, examples and embodiments described herein may be implemented as non-transitory, computer-readable medium storing instructions executable by one or more electronic processors to perform the described functionality. As used in the present application, "non-transitory computer-readable medium" comprises all computer-readable media but does not consist of a transitory, propagating signal. Accordingly, non-transitory computer-readable medium may include, for example, a hard disk, a CD-ROM, an optical storage device, a magnetic storage device, a ROM (Read Only Memory), a RAM (Random Access Memory), register memory, a processor cache, or any combination thereof.

Many of the modules and logical structures described are capable of being implemented in software executed by a microprocessor or a similar device or of being implemented in hardware using a variety of components including, for example, application specific integrated circuits ("ASICs"). Terms like "controller" and "module" may include or refer to both hardware and/or software. Capitalized terms conform to common practices and help correlate the description with the coding examples, equations, and/or drawings. However, no specific meaning is implied or should be inferred simply due to the use of capitalization. Thus, the claims should not be limited to the specific examples or terminology or to any specific hardware or software implementation or combination of software or hardware.

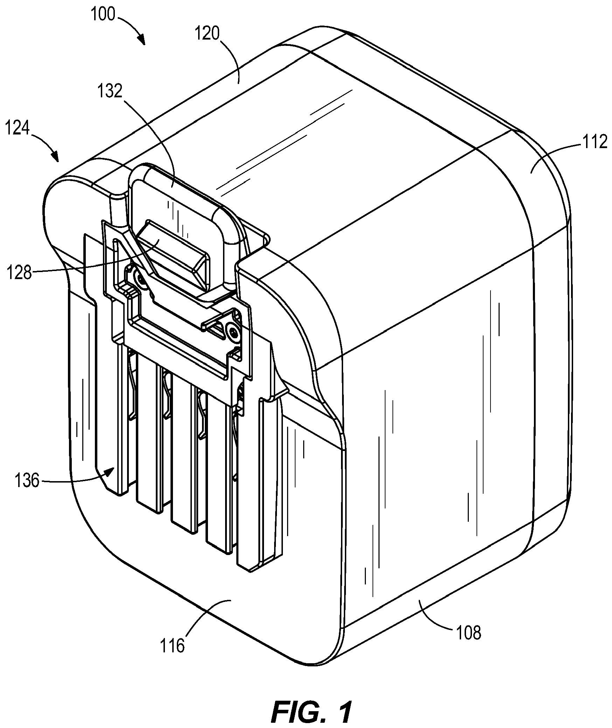

With reference to FIGS. 1-2, a battery pack 100 includes a housing 104 with a first housing portion 108 (for example, a top housing portion) and a second housing portion 112 (for example, a bottom housing portion). The battery pack 100 may be attached to and provide operating power to an electrical device, such as a power tool, an outdoor tool, or other motorized or non-motorized electrical device. The battery pack 100 is also connectable to a battery charger. To facilitate connection to the electrical device, the battery pack 100 may include a latch system 124 provided on the first housing portion 108. The first housing portion 108 may include a top wall 116 and a plurality of sidewalls 120. The latch system 124 includes a latching member 128, positioned on the top wall 116 of the first housing portion 108, and a latch actuator 132 extending out from the first housing portion 108 past the sidewall 120. When the battery pack 100 is supported on the electrical device, the latching member 128 engages a corresponding structure in the electrical device to inhibit inadvertent disconnection of or disengaging from the battery pack 100. The battery pack 100 may be released from the electrical device when a user actuates the latch actuator 132 and slides the battery pack 100 away from the electrical device. With the illustrated configuration, the battery pack 100 may slidingly mate with a surface of the electrical device or the battery charger. In other examples, portions of the battery pack 100 may be received within a battery receptacle of the electrical device or battery charger.

The battery pack 100 may include a terminal assembly 136 supported on the top wall 116 of the first housing portion 108 adjacent the latch system 124. The terminal assembly 136 provides electrical connection to the electrical device or the battery charger when coupled to the battery pack 100. The terminal assembly 136 may include a positive power terminal and a negative power terminal. In some examples, the terminal assembly 136 may also include a separate charging terminal and/or one or more communication/data terminals.

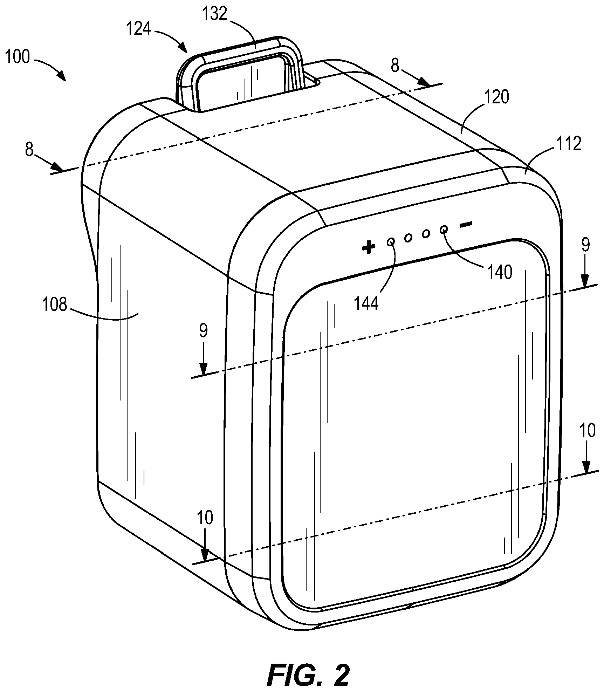

As seen in FIG. 2, the battery pack 100 includes a display 140. The display 140 may be used to indicate a charge state of the battery pack 100 or communicate other information about the battery. In the illustrated example, the display 140 includes a plurality of light elements 144 (for example, light emitting diodes (LEDs)) and is provided on the second housing portion 112. In other examples, the display 140 may include a screen, or other visual indicators or may be provided on the first housing portion 108.

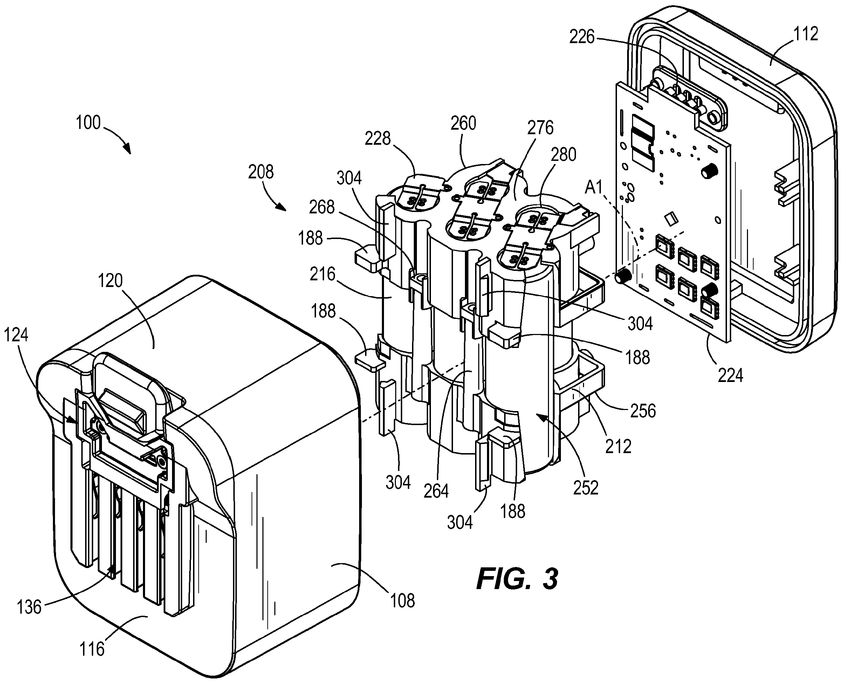

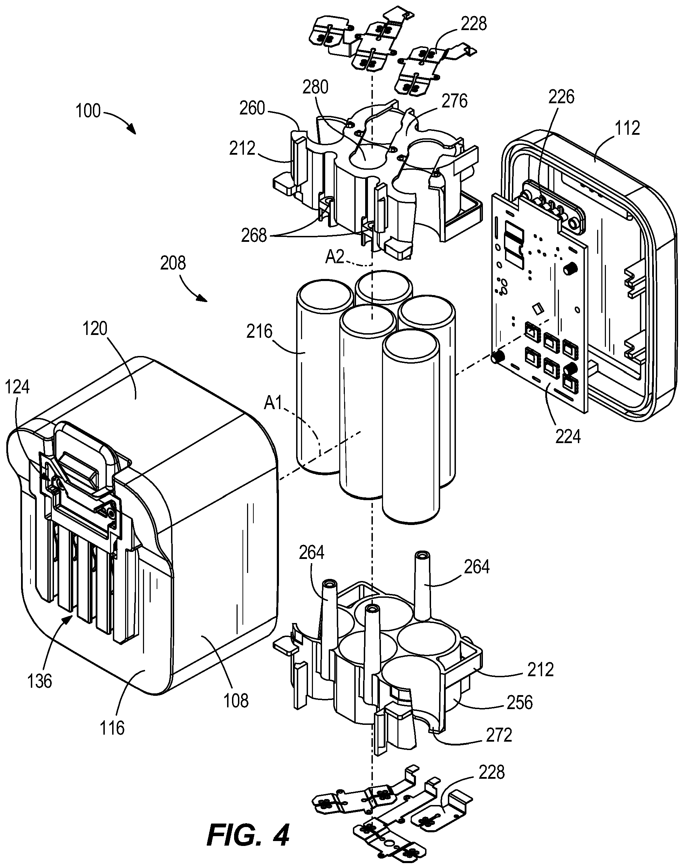

FIGS. 3-5 illustrate exploded views of the battery pack 100. In the illustrated configuration, the housing 104 defines a cavity 148 and the first housing portion 108 and the second housing portion 112 are coupled together along an insertion axis A1 to surround and enclose the cavity 148. In the illustrated example, the cavity 148 is defined by the first housing portion 108 and includes a cavity opening 152 positioned between the edges of the plurality of sidewalls 120. The second housing portion 112 acts as a cover to selectively enclose the cavity 148 when the second housing portion 112 is coupled to the first housing portion 108.

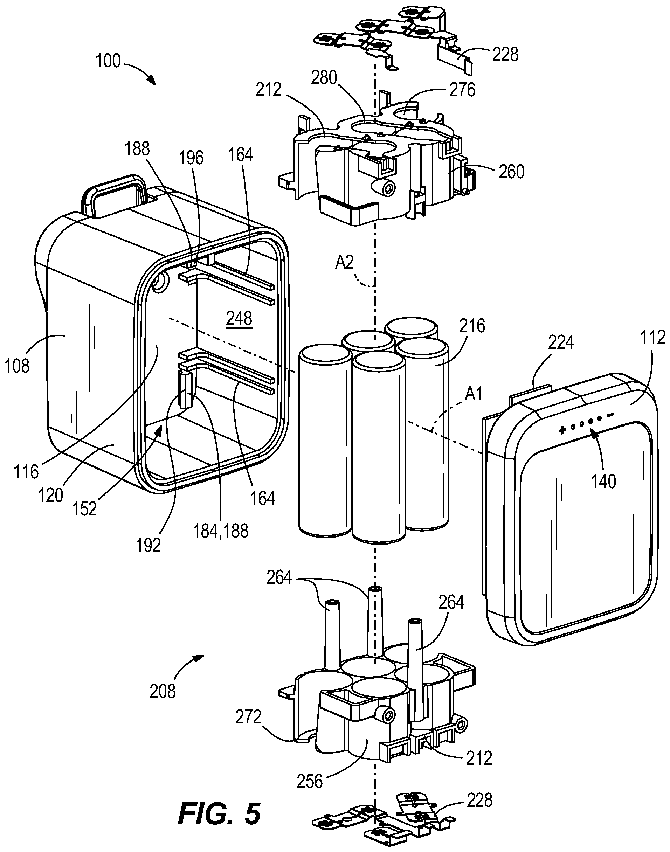

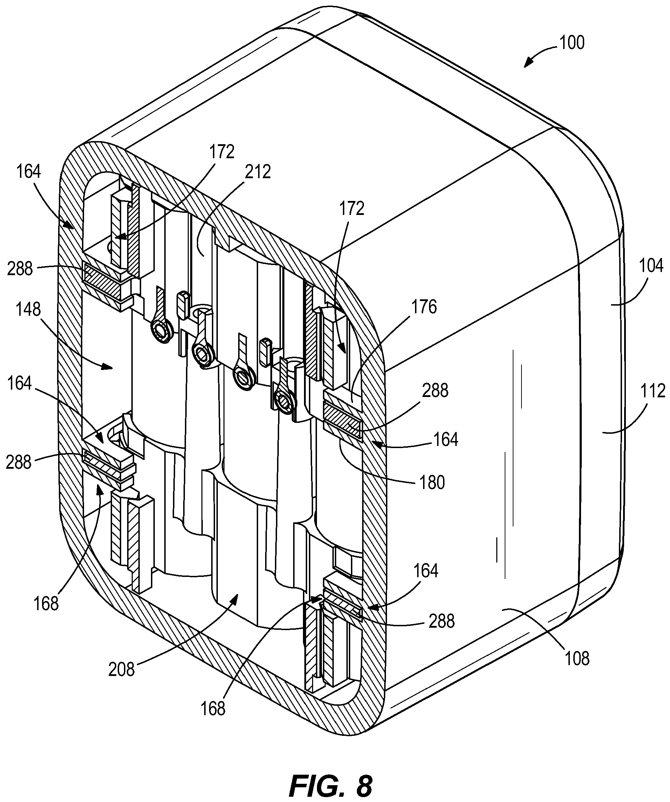

As seen best in FIGS. 5 and 8, the first housing portion 108 may include a guide feature including a plurality of positioning grooves 164. In the illustrated example, the guide feature includes a pair of first positioning grooves 168 and a pair of second positioning grooves 172 (for example, a pair of positioning grooves). The pair of first positioning grooves 168 includes a positioning groove 164 positioned in the cavity 148 on one of the plurality of sidewalls 120 and another positioning groove 164 positioned in the cavity 148 on another of the plurality of sidewalls 120 opposite the other positioning groove 164. The pair of second positioning grooves 172 are positioned similarly, on the same opposing sidewalls 120 of the plurality of sidewalls 120 as the pair of first positioning grooves 168. In some examples, other arrangements of the plurality of positioning grooves 164 may be used. For example, the pair of first positioning grooves 168 and the pair of second positioning grooves 172 may be positioned on different sidewalls 120 so that each of the plurality of sidewalls 120 includes a positioning groove 164. The positioning groove 164 may be integrally formed with the first housing portion 108. In the illustrated example, each positioning groove 164 is formed by a first rail 176 and a second rail 180 extending up from a surface of the sidewall 120. The first rail 176 and second rail 180 extend parallel to each other and parallel to the insertion axis A1. In some examples, the positioning groove 164 may be formed by an elongate recess extending into a surface of the sidewall 120 rather than by positioning rails above the surface of the sidewall 120.

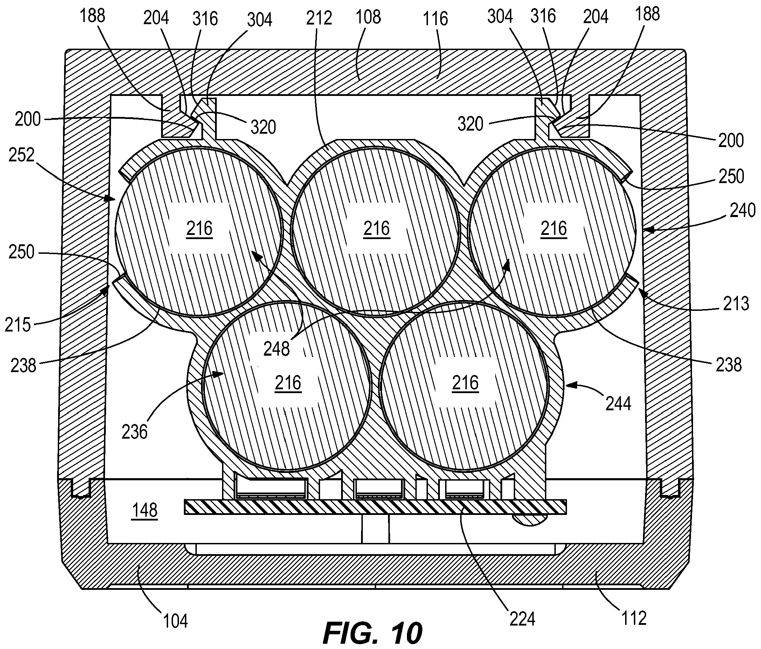

With reference to FIGS. 5 and 10, the first housing portion 108 may also include at least one engaging member 184. The engaging member 184 extends within the cavity 148 and extends out from the top wall 116, the surface opposite the cavity opening 152, along the insertion axis A1. The engaging member 184 may be movable (for example, deformable) from a first position to a second position and may be biased to return to the first position. In the illustrated example, the engaging member 184 may be integrally formed with the first housing portion 108 and may include at least one tab 188 (for example, one or more resilient tabs). The tab 188 is biased to return to the first position by the elasticity of the shape and structure of the tab 188. In some examples, the engaging member 184 may include a separate biasing element to return the tab 188 to the first position. In the illustrated example, the tab 188 is deformable in a direction perpendicular to the insertion axis A1. The engaging member 184 may include a pair of first tabs 192 and a pair of second tabs 196. Each tab 188 may be elongated in a direction perpendicular to the insertion axis A1, and perpendicular to the direction of deformation. Each resilient tab 188 includes a first cam surface 200 and a first abutting surface 204. In the first position, the first cam surface 200 is angled with respect to the insertion axis A1.

With continued reference to FIGS. 3-5, a cell assembly 208 may be positioned in the cavity 148. The cell assembly 208 may include a cell carrier 212 supporting a plurality of battery cells 216. In the illustrated example, the cell carrier 212 supports the plurality of battery cells 216 by at least partially enclosing the cells 216. In other examples, the plurality of battery cells 216 may be supported on the cell carrier 212 in different ways, including being fixed to the cell carrier 212. In the illustrated example, the plurality of battery cells 216 are cylindrical cells. Each cell 216 extends along a longitudinal cell axis A2. The plurality of battery cells 216 includes five cylindrical cells. In other examples, other number of cells 216 may be used. Each battery cell 216 may have a nominal voltage between about 2.5 V and about 5 V. The battery pack 100 may have a nominal capacity between about 3 Amp-hours (Ah) and about 6 Ah or more (e.g., up to about 9 Ah). The battery cells 216 may be any rechargeable battery cell chemistry type, such as, for example, Lithium, (Li), Lithium-metal, Lithium-ion (Li-ion), other Lithium-based chemistry, Nickel-Cadmium (NiCad), Nickel-Metal Hydride (NiMH), etc.

The cell assembly 208 may further include a printed circuit board (PCB) 224 mountable on a lower side of the cell carrier 212. In one example, the PCB 224 is mounted to the cell carrier 212 using one or more fasteners. The PCB 224 includes various electronics of the battery pack 100. For example, the PCB 224 may include a battery pack controller, a current sensor, a voltage sensor, charge and discharge FETs, etc. In the illustrated example the light elements 144 for the display 140 are mounted directly to the PCB 224 and the light is directed to an outside of the second housing portion 112 by light guides 226. In some examples the light elements 144 may be connected to the PCB 224 by wires and may be mounted to the second housing portion 112.

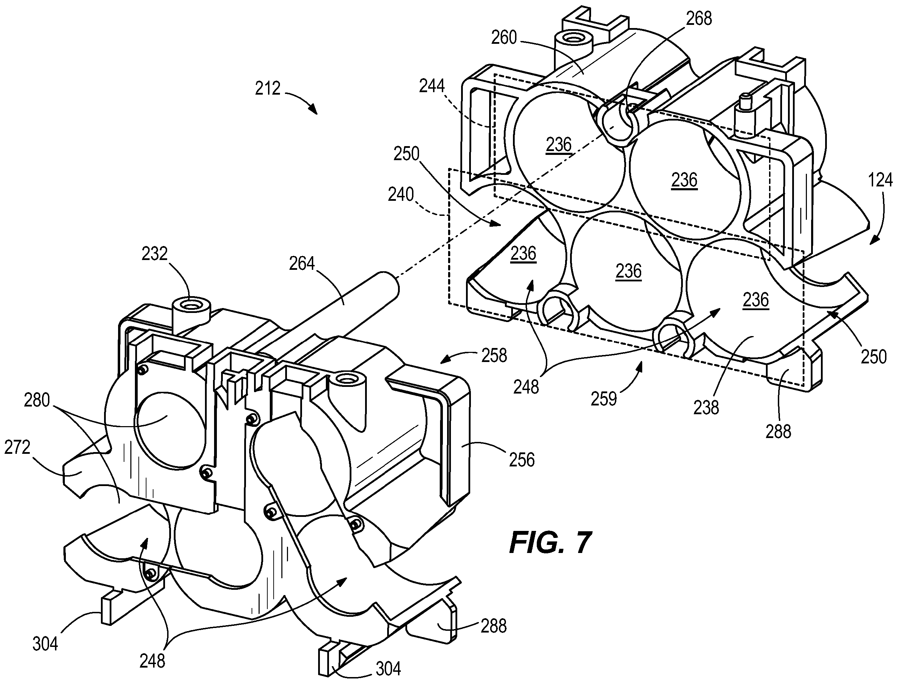

As seen in FIG. 3, the cell assembly 208 may include weld straps 228 to make connections between each of the plurality of battery cells 216 and between the battery cells 216 and the PCB 224. The weld straps 228 are formed of electrically-conductive weld strap material. Weld straps 228 are coupled to both ends of the battery cells 216. In the illustrated example the weld straps 228 are arranged to couple the plurality of battery cells 216 in series. In some examples, the weld straps 228 may be arranged to couple cells 216 or groups of cells 216 in other ways, such as in parallel. The cells 216 are connected by the weld straps 228 to the PCB 224, which may be coupled to the terminal assembly 136 by additional wiring. Therefore, electrical power from the plurality of cells 216 may be transmitted to or from the terminal assembly 136 and, by extension, any attached electrical device. As seen in FIG. 7, the cell carrier 212 includes mounting features 232 for coupling the PCB 224 to the cell carrier 212.

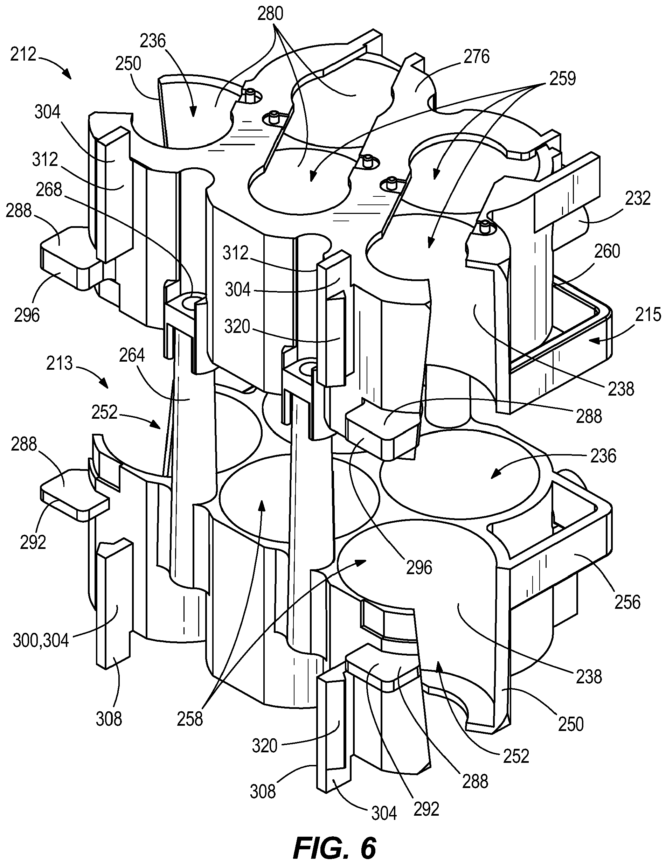

As seen in FIGS. 6-7, the cell carrier 212 includes a plurality of channels 236 for receiving the plurality of battery cells 216. The plurality of channels 236 may be arranged in a log-stack configuration. Each channel 236 may be partially defined by a circumferential wall 238 of the cell carrier 212. The circumferential wall 238 may at least partially surround the channel 236. The plurality of channels 236 includes a first row of channels 240 and a second row of channels 244. The first row of channels 240 is larger than the second row of channels 244. In other words, the first row of channels 240 has more of the plurality of channels 236 than the second row of channels 244. The first row of channels 240 is also larger than the second row of channels 240 in that the first row of channels 240 is wider than the second row of channels 244. In the illustrated example, the cell carrier 212 includes a set of five channels 236 to receive the five cylindrical cells 216. The five channels 236 are arranged so that the first row of channels 240 includes three channels 236, and the second row of channels 244 includes two channels 236. In some examples, the plurality of channels 236 may include additional channels to accommodate additional battery cells 216 based on the number of battery cells 216. In some examples the plurality of channels 236 may be arranged in more than two rows. The plurality of channels 236, regardless of the number of channels 236 or the number of rows, may be arranged in the log-stack orientation, so that each subsequent row is smaller than the previous row.

The plurality of channels 236 are positioned such that the first row of channels 240 extends across a width of the cell carrier 212. The cell carrier 212 extends along a width between a first side 213 and a second side 215. The first row of channels 240 includes a pair of outer channels 248 at an outer edge of the cell carrier 212 or in other words at either the first side 213 or the second side 215 of the cell carrier 212. Each outer channel 248 includes a gap 250 in the associated circumferential wall 238. The gap 250 defines an elongated opening 252 (or elongate slot). As seen in FIG. 3, when the cells 216 are received in the plurality of channels 236, the cells 216 in the outer channels 248 may be exposed along a full length of the cell 216 through the elongated opening 252.

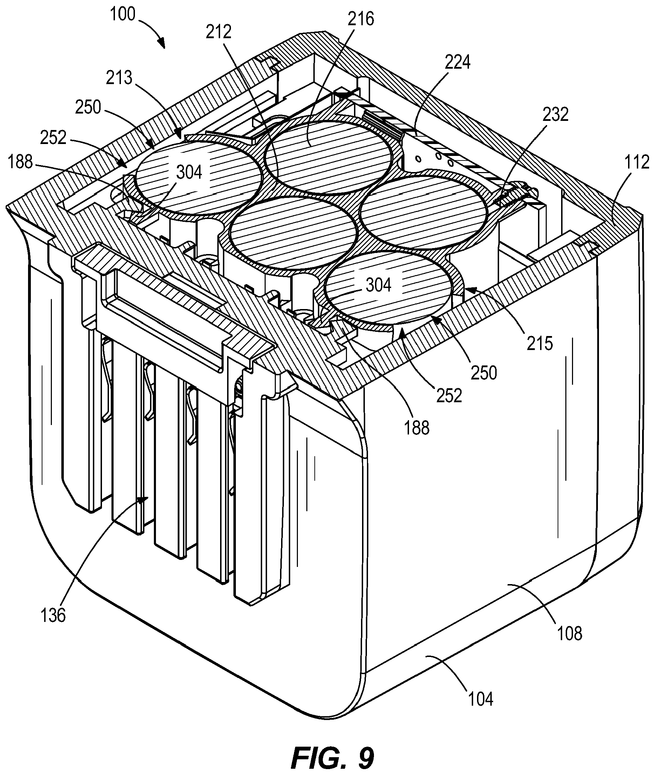

As best seen in FIGS. 9 and 10, the elongated opening 252 decreases a width of the cell carrier 212. The gap 250 in the circumferential wall 238 of the outer channel 248 is positioned so that the edge of the contained cell 216 extends up to or past the widest point of the circumferential wall 238. The hypothetical footprint of the circumferential wall 238 without the gap 250 would result in a wider cell carrier 212. The elongated opening 252 thus contributes to a more compact battery pack 100. The elongated opening 252 may also improve the heat dissipation of the cells 216 contained in the cell carrier 212.

With reference to FIGS. 6 and 7, the cell carrier 212 includes a first housing 256 and a second housing 260. The first housing 256 is coupled to the second housing 260 by one or more fasteners. In the illustrated example the first housing 256 includes a plurality of bosses 264 and the second housing 260 includes a set of openings 268. The first housing 256 includes a first end wall 272 and the second housing 260 includes a second end wall 276. Each of the plurality of channels 236 extends between the first end wall 272 and the second end wall 276. The first and second end walls 272, 276 include access openings 280 that allow access to each of the plurality of channels 236. As seen in FIG. 3, the weld straps 228 extend through the access openings 280 to contact the cells 216 positioned in the channels 236. In some examples the weld straps 228 are mounted directly to the cells 216 through the access openings 280. In other examples, the weld straps 228 may be mounted on the cell carrier 212 via heat staking or other known methods. The plurality of channels 236 may be divided between the first housing 256 and the second housing 260. The first housing 256 may include a set of first channel halves 258 (for example, a set of first openings) and the second housing 260 may include a set of second channel halves 259 (for example, a set of second openings). When the first housing 256 is coupled to the second housing 260 the channel halves 258, 259 cooperate to form the plurality of channels 236.

As seen in FIGS. 3 and 6, the elongated opening 252 extends between the access opening 280 in the first end wall 272 and the access opening 280 in the second end wall 276 so the elongate opening is continuous between the one end of the cell 216 in the outer channel 248 and the other end of the cell 216 in the outer channel 248.

With reference to FIGS. 6-7, the cell carrier 212 includes a guide feature including at least one positioning fin 288 (for example, a guide projection or a guide fin) extending out from the cell carrier 212. The guide feature may include a pair of first positioning fins 292 and a pair of second positioning fins 296 (for example, a pair of positioning fins). In the illustrated example the positioning fins 288 are integrally formed with the cell carrier 212 and extend outward from opposite sides of the cell carrier 212. Specifically, the pair of first positioning fins 292 may be positioned on the first housing 256 and the pair of second positioning fins 296 may be positioned on the second housing 260. The pair of first positioning fins 292 may include a positioning fin 288 at the first side 213 and a positioning fin 288 on the opposite side at the second side 215 of the cell carrier 212. Similarly, the pair of second positioning fins 296 may include a positioning fin 288 on the first side 213 and a positioning fin 288 on the second side 215 of the cell carrier 212.

With continued reference to FIGS. 6 and 7, the cell carrier 212 also includes a connection member 300 including at least one tab 304. The connection member 300 may include a pair of first tabs 308 and a pair of second tabs 312. The pair of first tabs 308 may be positioned on the first housing 256 and the pair of second tabs 312 may be positioned on the second housing 260. Each tab 304 may be movable (for example, deformable) from a first position to a second position and is biased to return to the first position. In the illustrated example, the tabs 304 are resilient tabs 304 and are integrally formed with the cell carrier 212. The resilient tabs 304 are driven to return to the first position by the inherent elasticity of the shape and structure of the tab 304. In some examples, a separate biasing element is provided to return the tab 304 to the first position. Each tab 304 includes a cam surface 316 (for example, a second cam surface) and an abutting surface 320 (for example, a second abutting surface). The tabs 304 may be elongated in a direction perpendicular to the direction of deformation, thus increasing the surface area of the cam surface 316 and the abutting surface 320.

To assemble the battery pack 100, the plurality of cells 216 may be positioned in the first set of channel halves 258. The first housing 256 may be aligned with the second housing 260 by aligning the set of first channel halves 258 with the set of second channel halves 259 and then the second housing 260 may be moved in a direction parallel to the axes A2 of the cells 216 positioned in the first housing 256. Once the openings 268 in the second housing 260 are adjacent the bosses 264 in the first housing 256, fasteners may pass through openings 268 and fasten to the bosses 264 to secure the first housing 256 to the second housing 260. The PCB 224 may be coupled to the side of the cell carrier 212 using the mounting features 232. Then, the weld straps 228 may be coupled to either the cell carrier 212 or the cells 216 to connect the plurality of cells 216 to each other and to the PCB 224.

The cell assembly 208 may then be positioned at the cavity opening 152 so that the guide features of the cell carrier 212 align with the guide features of the first housing portion 108. More specifically, the positioning fins 288 may be positioned so that the pair of first positioning fins 292 are adjacent the pair of first positioning grooves 168 and the pair of second positioning fins 296 are adjacent the pair of second positioning grooves 172. Each positioning fin 288 is positioned between the first rail 176 and the second rail 180 of the positioning groove 164. The cell assembly 208 is then moved along the insertion axis A1 toward the top wall 116 so that the positioning fin 288 rides along the positioning groove 164, as seen in FIG. 8. As the cell assembly 208 moves further into the cavity 148, the connection member 300 interacts with the engaging member 184. Specifically, the tabs 304 positioned on the cell carrier 212 are moved toward the tabs 188 positioned on the top wall 116 of the first housing portion 108. The first cam surface 200 and second cam surface 316 may engage to deflect the tabs 188, 304 from their respective first positions. As the cell carrier 212 continues to move along the insertion axis A1, the second cam surface 316 moves past the first cam surface 200. Then, the tabs 188, 304 may return to their first position. In the first position, the abutting surfaces of the tabs 188, 304 are engaged to prevent the cell carrier 212 from traveling backward along the insertion axis A1, as seen in FIG. 10. Therefore, the cell assembly 208 is secured to the housing 104, and specifically to the first housing portion 108, forming a snap-fit connection. The connection between the cell assembly 208 and the housing 104 is therefore established without using fasteners and using a snap-fit connection. Throughout the interaction of the connection member 300 and the engaging member 184, the positioning fins 288 cooperates with the positioning grooves 164 to inhibit rotation of the cell carrier 212 relative to the housing 104, ensuring that the first cam surfaces 200 and the second cam surfaces 316 properly engage. Once the cell assembly 208 is secured to the first housing portion 108, the second housing portion 112 can be secured to the first housing portion 108 to enclose the cavity 148. The second housing portion 112 may be coupled to the first housing portion 108 by sonic welding, which also provides a fluid tight seal between the housing portions 108,112. In some examples, other methods of securing are used, such as the use of fasteners, adhesives, snap fits, etc. and additional sealing members may be included.

Once assembled, the battery pack 100 may be coupled to the electronic device or charger and used to provide or receive power.

Although the invention has been described in detail with reference to certain preferred examples and embodiments, variations and modifications exist within the scope and spirit of one or more independent aspects of the invention as described.

One or more independent features and/or independent advantages of the invention may be set forth in the following claims.

Clause 1. A battery pack comprising: a housing including an engaging member; a terminal assembly coupled to the housing; a plurality of cells configured to electrically connect to the terminal assembly; and a cell carrier coupled to the housing and supporting the plurality of cells in the housing, the cell carrier including a connection member, wherein the connection member and the engaging member cooperate forming a snap-fit connection to couple the cell carrier to the housing.

Clause 2. The battery pack of clause 1, wherein the connection member includes one or more resilient tabs.

Clause 3. The battery pack of clause 1, wherein the connection member is movable from a first position to a second position, and wherein the connection member is biased toward the first position.

Clause 4. The battery pack of clause 1, wherein the engaging member includes a first cam surface and the connection member includes a second cam surface, and wherein as the cell carrier is coupled to the housing the first cam surface contacts the second cam surface to deflect the connection member from a first position until the first cam surface passes the second cam surface and the connection member returns to the first position.

Clause 5. The battery pack of clause 4, wherein the connection member further includes a first abutting surface, and the engaging member includes a second abutting surface, wherein when the cell carrier is coupled to the housing, the first abutting surface contacts the second abutting surface to inhibit the cell carrier from disengaging from the housing.

Clause 6. The battery pack of clause 1, wherein the housing includes a first housing and a second housing, and wherein the terminal assembly and the engaging member are on the second housing.

Clause 7. The battery pack of clause 6, wherein the first housing is coupled to the second housing by sonic welding.

Clause 8. The battery pack of clause 1, wherein the engaging member includes a first cam surface and the connection member includes a second cam surface, and wherein as the cell carrier is coupled to the housing the first cam surface contacts the second cam surface to deflect the engaging member from a first position until the first cam surface passes the second cam surface and the engaging member returns to the first position.

Clause 9. The battery pack of clause 1, wherein the cell carrier includes a positioning fin, and the housing includes a positioning groove configured to receive the positioning fin to inhibit rotation of the cell carrier relative to the housing.

Clause 10. A battery pack comprising: a housing defining a cavity; a terminal assembly coupled to the housing; a plurality of cells configured to electrically connect to the terminal assembly, each cell extending along a longitudinal axis; and a cell carrier coupled to the housing to support the plurality of cells within the cavity, the cell carrier including a plurality of channels configured to receive the plurality of cells, wherein at least one channel of the plurality of channels includes an elongate opening exposing a full length of the cell contained in the at least one channel.

Clause 11. The battery pack of clause 10, wherein the plurality of channels includes a first row of channels and a second row of channels, and wherein the first row of channels has more channels than the second row of channels.

Clause 12. The battery pack of clause 11, wherein the first row of channels includes at least one outer channel adjacent a side of the cell carrier, and wherein the at least one outer channel includes the elongate opening.

Clause 13. The battery pack of clause 10, wherein the plurality of channels are arranged in a log-stack orientation.

Clause 14. The battery pack of clause 10, wherein the cell carrier includes a circumferential wall surrounding each of the plurality of channels and the elongate opening is formed by a gap in the circumferential wall of the at least one channel.

Clause 15. The battery pack of clause 10, wherein the cell carrier extends between a first side and a second side along a width of the cell carrier, and wherein the elongate opening is positioned at one of the first side or the second side.

Clause 16. The battery pack of clause 10, wherein the cell carrier includes a positioning fin extending from the cell carrier and wherein the housing includes a positioning groove configured to receive the positioning fin to inhibit rotation of the cell carrier relative to the housing.

Clause 17. The battery pack of clause 16, wherein the positioning fin is one of a pair of positioning fins disposed on opposite sides of the cell carrier, and the positioning groove is one of a pair of positioning grooves disposed on opposite sides of the cavity.

Clause 18. A cell carrier for supporting a plurality of cells in a cavity of a battery pack, each cell extending along an axis, the cell carrier comprising: a housing; and a plurality of channels formed in the housing, wherein each of the plurality of channels is configured to receive one of the plurality of cells, the plurality of channels including a first row of channels, and a second row of channels, wherein the second row of channels has more channels than the first row of channels, and wherein the plurality of channels includes at least one channel having an elongate slot exposing a length of the cell positioned in the at least one channel.

Clause 19. The cell carrier of clause 18, wherein the housing comprises a first housing with a set of first openings and a second housing with a set of second openings, and wherein when the first housing is coupled to the second housing, the set of first openings align with the set of second openings to form the plurality of channels.

Clause 20. The cell carrier of clause 18, wherein the elongate slot is positioned at an outer edge of the second row of channels.

## Claims

1. A battery pack comprising:
a housing including an engaging member;
a terminal assembly coupled to the housing;
a plurality of cells configured to electrically connect to the terminal assembly; and
a cell carrier coupled to the housing and supporting the plurality of cells in the housing, the cell carrier including a connection member, wherein the connection member and the engaging member cooperate forming a snap-fit connection to couple the cell carrier to the housing.

2. The battery pack of claim 1, wherein the connection member includes one or more resilient tabs;
optionally, the connection member is movable from a first position to a second position, and wherein the connection member is biased toward the first position.

3. The battery pack of claim 1, wherein the engaging member includes a first cam surface and the connection member includes a second cam surface, and wherein as the cell carrier is coupled to the housing the first cam surface contacts the second cam surface to deflect the connection member from a first position until the first cam surface passes the second cam surface and the connection member returns to the first position.

4. The battery pack of claim 3, wherein the connection member further includes a first abutting surface, and the engaging member includes a second abutting surface, wherein when the cell carrier is coupled to the housing, the first abutting surface contacts the second abutting surface to inhibit the cell carrier from disengaging from the housing.

5. The battery pack of claim 1, wherein the housing includes a first housing and a second housing, and wherein the terminal assembly and the engaging member are on the second housing;
optionally, the first housing is coupled to the second housing by sonic welding.

6. The battery pack of claim 1, wherein the engaging member includes a first cam surface and the connection member includes a second cam surface, and wherein as the cell carrier is coupled to the housing the first cam surface contacts the second cam surface to deflect the engaging member from a first position until the first cam surface passes the second cam surface and the engaging member returns to the first position.

7. The battery pack of claim 1, wherein the cell carrier includes a positioning fin, and the housing includes a positioning groove configured to receive the positioning fin to inhibit rotation of the cell carrier relative to the housing.

8. A battery pack comprising:
a housing defining a cavity;
a terminal assembly coupled to the housing;
a plurality of cells configured to electrically connect to the terminal assembly, each cell extending along a longitudinal axis; and
a cell carrier coupled to the housing to support the plurality of cells within the cavity, the cell carrier including a plurality of channels configured to receive the plurality of cells, wherein at least one channel of the plurality of channels includes an elongate opening exposing a full length of the cell contained in the at least one channel.

9. The battery pack of claim 8, wherein the plurality of channels includes a first row of channels and a second row of channels, and wherein the first row of channels has more channels than the second row of channels.

10. The battery pack of claim 9, wherein the first row of channels includes at least one outer channel adjacent a side of the cell carrier, and wherein the at least one outer channel includes the elongate opening;
optionally, the plurality of channels are arranged in a log-stack orientation.

11. The battery pack of claim 8, wherein the cell carrier includes a circumferential wall surrounding each of the plurality of channels and the elongate opening is formed by a gap in the circumferential wall of the at least one channel;

12. The battery pack of claim 8, wherein the cell carrier extends between a first side and a second side along a width of the cell carrier, and wherein the elongate opening is positioned at one of the first side or the second side;
preferably, the cell carrier includes a positioning fin extending from the cell carrier and wherein the housing includes a positioning groove configured to receive the positioning fin to inhibit rotation of the cell carrier relative to the housing;
preferably, the positioning fin is one of a pair of positioning fins disposed on opposite sides of the cell carrier, and the positioning groove is one of a pair of positioning grooves disposed on opposite sides of the cavity.

13. A cell carrier for supporting a plurality of cells in a cavity of a battery pack, each cell extending along an axis, the cell carrier comprising:
a housing; and
a plurality of channels formed in the housing, wherein each of the plurality of channels is configured to receive one of the plurality of cells, the plurality of channels including
a first row of channels, and
a second row of channels, wherein the second row of channels has more channels than the first row of channels, and
wherein the plurality of channels includes at least one channel having an elongate slot exposing a length of the cell positioned in the at least one channel.

14. The cell carrier of claim 13, wherein the housing comprises a first housing with a set of first openings and a second housing with a set of second openings, and wherein when the first housing is coupled to the second housing, the set of first openings align with the set of second openings to form the plurality of channels.

15. The cell carrier of claim 13, wherein the elongate slot is positioned at an outer edge of the second row of channels.
